# EUROPEAN PATENT APPLICATION

(11) **EP 3 835 982 A1**
(43) Date of publication of application: **16.06.2021**
(21) Application number: 19848245.7
(22) Date of filing: 05.04.2019
(51) Int. Cl.: G06F 21/32

(54) **TERMINAL DEVICE, AUTHENTICATION SERVER, CONTROL METHOD FOR TERMINAL DEVICE, AUTHENTICATION METHOD, AND PROGRAM**

(30) Priority: 07.08.2018 JP 2018148747
(71) Applicant: NEC Corporation, 108-8001 Tokyo (JP)
(72) Inventor: KAWAGUCHI Shoko, Tokyo 108-8001 (JP); YOSHIKAWA Naoya, Tokyo 108-8001 (JP)
(74) Representative: Betten & Resch
(86) International application number: PCT/JP2019/015198
(87) International publication number: WO 2020/031429

(57) **Abstract**

A terminal apparatus (10) acquires biometric information of a user stored in a biometric information management server (60) through an authentication server (20) and an APP and WEB server (50), performs biometric authentication using the acquired biometric information, and performs a FIDO authentication registration process in a case in which the authentication has succeeded.

## Description

### TECHNICAL FIELD

The present invention relates to a terminal apparatus, an authentication server, a method for controlling a terminal apparatus, an authentication method, and a program.

### BACKGROUND ART

In an example of authentication according to a fast identity online (FIDO) protocol (hereinafter, referred to as "FIDO authentication"), reference biometric information is registered in a terminal apparatus. Then, the terminal apparatus collates biometric information of a person to be authenticated which has been input to the terminal apparatus with the reference biometric information registered in the terminal apparatus.

Patent Document 1 discloses a certificate generation system that reduces the frequency of use of an individual number card. The certificate generation system includes an information processing apparatus and a certificate generation apparatus.

The information processing apparatus includes: a reading unit that reads a signature certificate from an individual number card of a user; a reading unit that reads first biometric information of the user; a generation unit that generates a set of a public key and a private key; a first transmitting unit that transmits the public key and information related to the signature certificate to the certificate generation apparatus; and a first storage unit that, when a public key certificate including the public key is received from the certificate generation apparatus, stores the public key certificate so as to be associated with the first biometric information and the private key.

The certificate generation apparatus includes: a generation control unit that controls the generation of the public key certificate including the public key when the public key is received from the information processing apparatus; a second transmitting unit that transmits the generated public key certificate to the information processing apparatus; and a second storage unit that stores the public key certificate so as to be associated with the information related to the signature certificate.

### RELATED DOCUMENT

### PATENT DOCUMENT

[Patent Document 1] Japanese Patent Application Publication No. 2018-7011

### SUMMARY OF THE INVENTION

### TECHNICAL PROBLEM

The inventors found the problem that, in FIDO authentication, it is necessary to prevent spoofing at the stage of registering reference biometric information in a terminal apparatus. Here, "spoofing" is, for example, an act in which person A pretends to be person B and registers the biometric information of person A. In this case, the biometric information of person A is registered so as to be associated with the identifier (ID) of person B. Patent Document 1 does not disclose and suggest the problem and means for solving the problem.

An object of the invention is to prevent spoofing at the stage of registering reference biometric information for FIDO authentication in a terminal apparatus.

### SOLUTION TO PROBLEM

According to the invention, there is provided a program that causes a computer of a terminal apparatus to function as: a transmitting and receiving unit that transmits a user identifier (ID) and a first biometric information request to an external apparatus and receives first biometric information stored in advance in a biometric information management server so as to be associated with the user ID from the external apparatus; an input receiving unit that receives an input of second biometric information through a biometric information input apparatus; a collation unit that collates the first biometric information with the second biometric information; and a registration unit that performs a process of registering biometric information in the host terminal apparatus in a case in which the collation has succeeded.

In addition, according to the invention, there is provided a terminal apparatus including: a transmitting and receiving unit that transmits a user ID and a first biometric information request to an external apparatus and receives first biometric information stored in advance in a biometric information management server so as to be associated with the user ID from the external apparatus; an input receiving unit that receives an input of second biometric information through a biometric information input apparatus; a collation unit that collates the first biometric information with the second biometric information; and a registration unit that performs a process of registering biometric information in the host terminal apparatus in a case in which the collation has succeeded.

Further, according to the invention, there is provided a method for controlling a terminal apparatus in which a computer performs: a transmitting and receiving step of transmitting a user ID and a first biometric information request to an external apparatus and receiving first biometric information stored in advance in a biometric information management server so as to be associated with the user ID from the external apparatus; an input receiving step of receiving an input of second biometric information through a biometric information input apparatus; a collation step of collating the first biometric information with the second biometric information; and a registration step of performing a process of registering biometric information in the host terminal apparatus in a case in which the collation has succeeded.

Furthermore, according to the invention, there is provided an authentication server including: a request receiving unit that receives a user ID and a first biometric information request from an external apparatus; a first biometric information receiving unit that receives first biometric information stored in advance in a biometric information management server so as to be associated with the user ID from the biometric information management server; and a transmitting unit that transmits the first biometric information to the external apparatus.

Moreover, according to the invention, there is provided an authentication method in which a computer performs: a request receiving step of receiving a user ID and a first biometric information request from an external apparatus; a first biometric information receiving step of receiving first biometric information stored in advance in a biometric information management server so as to be associated with the user ID from the biometric information management server; and a transmitting step of transmitting the first biometric information to the external apparatus.

In addition, according to the invention, there is provided a program that causes a computer to function as: a request receiving unit that receives a user ID and a first biometric information request from an external apparatus; a first biometric information receiving unit that receives first biometric information stored in advance in a biometric information management server so as to be associated with the user ID from the biometric information management server; and a transmitting unit that transmits the first biometric information to the external apparatus.

Further, according to the invention, there is provided a program that causes a computer of a terminal apparatus to function as: an input receiving unit that receives an input of second biometric information through a biometric information input apparatus; a transmitting and receiving unit that transmits a user ID, the second biometric information, and a collation request to an external apparatus and receives a result of collation between the second biometric information and first biometric information stored in advance in a biometric information management server so as to be associated with the user ID from the external apparatus; and a registration unit that performs a process of registering biometric information in the host terminal apparatus in a case in which the collation has succeeded.

Furthermore, according to the invention, there is provided a terminal apparatus including: an input receiving unit that receives an input of second biometric information through a biometric information input apparatus; a transmitting and receiving unit that transmits a user ID, the second biometric information, and a collation request to an external apparatus and receives a result of collation between the second biometric information and first biometric information stored in advance in a biometric information management server so as to be associated with the user ID from the external apparatus; and a registration unit that performs a process of registering biometric information in the host terminal apparatus in a case in which the collation has succeeded.

Moreover, according to the invention, there is provided a method for controlling a terminal apparatus in which a computer performs: an input receiving step of receiving an input of second biometric information through a biometric information input apparatus; a transmitting and receiving step of transmitting a user ID, the second biometric information, and a collation request to an external apparatus and receiving a result of collation between the second biometric information and first biometric information stored in advance in a biometric information management server so as to be associated with the user ID from the external apparatus; and a registration step of performing a process of registering biometric information in the host terminal apparatus in a case in which the collation has succeeded.

In addition, according to the invention, there is provided an authentication server including: a request receiving unit that receives a user ID, second biometric information, and a collation request from an external apparatus; a first biometric information receiving unit that receives first biometric information stored in advance in a biometric information management server so as to be associated with the user ID from the biometric information management server; a collation unit that collates the first biometric information with the second biometric information; and a transmitting unit that transmits a collation result to the external apparatus.

Further, according to the invention, there is provided an authentication method in which a computer performs: a request receiving step of receiving a user ID, second biometric information, and a collation request from an external apparatus; a first biometric information receiving step of receiving first biometric information stored in advance in a biometric information management server so as to be associated with the user ID from the biometric information management server; a collation step of collating the first biometric information with the second biometric information; and a transmitting step of transmitting a collation result to the external apparatus.

Furthermore, according to the invention, there is provided a program that causes a computer to function as: a request receiving unit that receives a user ID, second biometric information, and a collation request from an external apparatus; a first biometric information receiving unit that receives first biometric information stored in advance in a biometric information management server so as to be associated with the user ID from the biometric information management server; a collation unit that collates the first biometric information with the second biometric information; and a transmitting unit that transmits a collation result to the external apparatus.

### ADVANTAGEOUS EFFECTS OF INVENTION

According to the invention, it is possible to prevent spoofing at the stage of registering reference biometric information for FIDO authentication in a terminal apparatus.

### BRIEF DESCRIPTION OF THE DRAWINGS

The above-mentioned object, other objects, features, and advantages will be further clarified by the preferred embodiments described below and the following accompanying drawings.

Fig. 1 is a diagram illustrating an example of a hardware configuration of an apparatus according to this example embodiment.
Fig. 2 is a diagram illustrating an example of a functional block diagram of an authentication system according to this example embodiment.
Fig. 3 is a diagram illustrating an example of a functional block diagram of a biometric information management server according to this example embodiment.
Fig. 4 is a diagram schematically illustrating an example of information stored in the biometric information management server according to this example embodiment.
Fig. 5 is a diagram illustrating an example of a functional block diagram of a terminal apparatus according to this example embodiment.
Fig. 6 is a diagram illustrating an example of a functional block diagram of an APP and WEB server according to this example embodiment.
Fig. 7 is a diagram illustrating an example of a functional block diagram of an authentication server according to this example embodiment.
Fig. 8 is a sequence diagram illustrating an example of the flow of a process of an authentication system according to this example embodiment.
Fig. 9 is a diagram illustrating an example of a functional block diagram of an authentication server according to this example embodiment.
Fig. 10 is a sequence diagram illustrating an example of the flow of a process of the authentication system according to this example embodiment.
Fig. 11 is a sequence diagram illustrating an example of the flow of the process of the authentication system according to this example embodiment.
Fig. 12 is a diagram illustrating an example of a functional block diagram of an authentication system according to this example embodiment.
Fig. 13 is a diagram illustrating an example of a functional block diagram of a terminal apparatus according to this example embodiment.
Fig. 14 is a diagram illustrating an example of a functional block diagram of an APP and WEB server according to this example embodiment.
Fig. 15 is a diagram illustrating an example of a functional block diagram of an authentication server according to this example embodiment.
Fig. 16 is a sequence diagram illustrating an example of the flow of a process of an authentication system according to this example embodiment.
Fig. 17 is a diagram illustrating an example of a functional block diagram of an authentication server according to this example embodiment.
Fig. 18 is a sequence diagram illustrating an example of the flow of a process of an authentication system according to this example embodiment.
Fig. 19 is a sequence diagram illustrating an example of the flow of the process of the authentication system according to this example embodiment.

### DESCRIPTION OF EMBODIMENTS

### <First Example Embodiment>

"Overview of Authentication System and Outline of Each Apparatus"

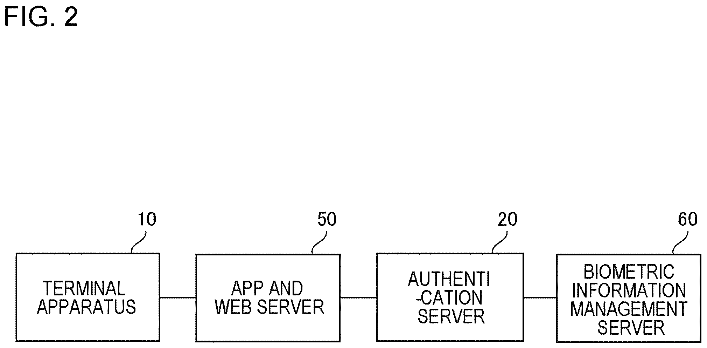

First, the overview of an authentication system according to this example embodiment and the outline of each apparatus will be described with reference to a functional block diagram illustrated in Fig. 2. The authentication system includes an authentication server 20 and an application (APP) and WEB server 50. The authentication system may further include at least one of a terminal apparatus 10 and a biometric information management server 60. These apparatuses are configured so as to communicate with each other through a communication network such as the Internet.

Each of the authentication server 20, the APP and WEB server 50, and the biometric information management server 60 may be implemented by a plurality of servers which are physically and/or logically separated from each other or may be physically and logically implemented by one server.

In addition, the authentication server 20 and the APP and WEB server 50 may be physically and/or logically separated from each other. That is, a program that implements the authentication server 20 may be installed in one of two servers which are physically and/or logically separated, and a program that implements the APP and WEB server 50 may be installed in the other server. Further, the authentication server 20 and the APP and WEB server 50 may be physically and logically integrally configured. That is, both the program that implements the authentication server 20 and the program that implements the APP and WEB server 50 may be physically and logically installed in one server.

The APP and WEB server 50 is a server that provides a predetermined service through a communication network such as the Internet. The APP and WEB server 50 may adopt FIDO authentication as authentication at the time of login. In addition, the services provided by the APP and WEB server 50 may include a process (hereinafter, an "authentication request process") that is performed in a case in which the FIDO authentication has succeeded. For example, the service provided by the APP and WEB server 50 may be Internet shopping, and the authentication request process may be payment or the like. In addition, the service provided by the APP and WEB server 50 may be Internet banking, and the authentication request process may be remittance or the like. Note that the examples given here are just illustrative and the invention is not limited thereto.

The terminal apparatus 10 is, for example, a smartphone, a tablet terminal, a personal computer (PC), a mobile phone, or the like. An application for exclusive use (hereinafter, referred to as a "dedicated application") for receiving the services provided by the APP and WEB server 50 is installed in the terminal apparatus 10. Further, functions for FIDO authentication, such as an Authenticator, an Authenticator Specific Module (ASM), and a FIDO Client, are introduced to the terminal apparatus 10.

The biometric information management server 60 stores biometric information of each of a plurality of persons and provides the biometric information of a predetermined person in response to a request from an external apparatus. For example, the biometric information management server 60 is a server that is managed by a national or local government and may store biometric information of residents. Note that the biometric information management server 60 may be a server that is managed by other organizations.

The authentication server 20 performs processes related to the FIDO authentication.

"Outline of Process of Registering Reference Biometric Information for FIDO Authentication in Terminal Apparatus 10"

After installing the dedicated application in the terminal apparatus 10, the user starts the dedicated application and performs various input operations for registering the reference biometric information for FIDO authentication in the terminal apparatus 10.

Before registering the reference biometric information in response to the input of the user, the terminal apparatus 10 performs biometric authentication using the biometric information stored in the biometric information management server 60 to check whether or not the user who is trying to register the reference biometric information is an authenticated user. In a case in which the biometric authentication has succeeded, the terminal apparatus 10 registers the reference biometric information. On the other hand, in a case in which the biometric authentication has failed, the terminal apparatus 10 does not register the reference biometric information.

As such, before registering the reference biometric information, the authentication system according to this example embodiment performs biometric authentication using the biometric information stored in the biometric information management server 60 to prevent spoofing at the stage of registering the reference biometric information in the terminal apparatus 10. Hereinafter, this will be described in detail.

### "Configuration of Each Apparatus"

Hereinafter, the configuration of each apparatus will be described in detail.

### "Configuration of Biometric Information Management Server 60"

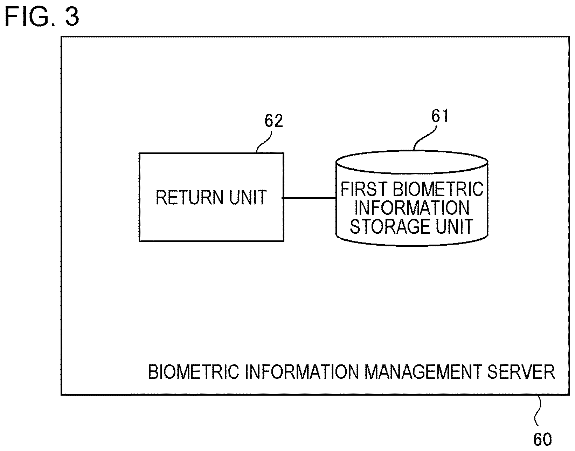

Fig. 3 illustrates an example of a functional block diagram of the biometric information management server 60. As illustrated in Fig. 3, the biometric information management server 60 includes a first biometric information storage unit 61 and a return unit 62.

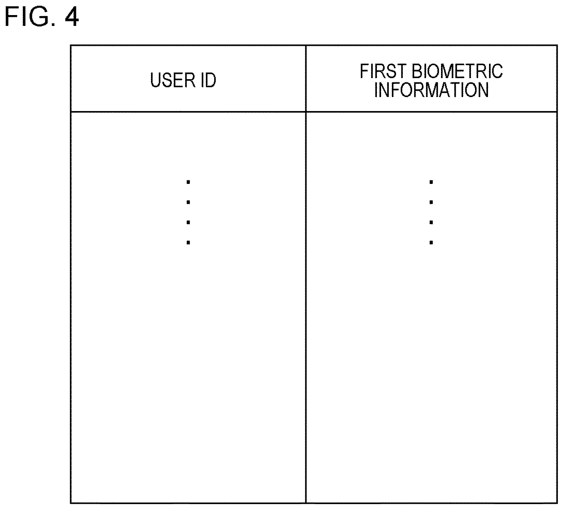

The first biometric information storage unit 61 stores biometric information of each of a plurality of persons. Fig. 4 schematically illustrates an example of the information stored in the biometric information management server 60. In the example illustrated in Fig. 4, a user ID and biometric information are stored so as to be associated with each other. Hereinafter, the biometric information stored in the biometric information management server 60 is referred to as "first biometric information".

The user ID is information for identifying each of the plurality of persons. For example, the user ID may be an individual number (for example: my number, a social security number, or the like) given to each national or citizen. In addition, the user ID may be information which is a combination of a plurality of information items, such as a name, a date of birth, and an address, and identifies an individual. Examples of the first biometric information include fingerprints, voiceprints, and irises. However, the first biometric information is not limited thereto.

When receiving a request that specifies the user ID to require the first biometric information from an external apparatus, the return unit 62 reads the first biometric information stored so as to be associated with the specified user ID from the first biometric information storage unit 61 and returns the first biometric information to the external apparatus.

### "Configuration of Terminal Apparatus 10"

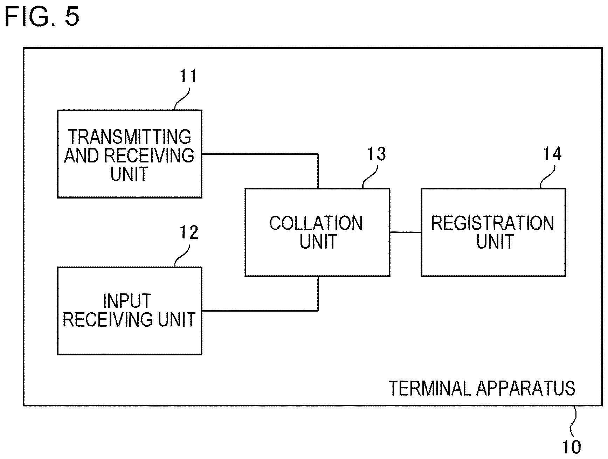

Fig. 5 illustrates an example of a functional block diagram of the terminal apparatus 10. As illustrated in Fig. 5, the terminal apparatus 10 includes a transmitting and receiving unit 11, an input receiving unit 12, a collation unit 13, and a registration unit 14. A predetermined application (dedicated application) is installed in the terminal apparatus 10 to give the functions of the transmitting and receiving unit 11, the input receiving unit 12, the collation unit 13, and the registration unit 14 to the terminal apparatus 10. That is, the dedicated application is a program that causes a computer of the terminal apparatus 10 to function as the transmitting and receiving unit 11, the input receiving unit 12, the collation unit 13, and the registration unit 14.

The transmitting and receiving unit 11 transmits a user ID and a first biometric information request to the APP and WEB server 50 (external apparatus). Then, the transmitting and receiving unit 11 receives the first biometric information of the user determined by the user ID from the APP and WEB server 50.

The input receiving unit 12 receives the input of biometric information through a biometric information input apparatus. Hereinafter, the biometric information acquired by the input receiving unit 12 is referred to as "second biometric information". Examples of the second biometric information include fingerprints, voiceprints, and irises. However, the second biometric information is not limited thereto. Further, examples of the biometric information input apparatus include a fingerprint sensor, a microphone, and a camera. However, the biometric information input apparatus is not limited thereto. The terminal apparatus 10 may include the biometric information input apparatus, or the biometric information input apparatus may be connected to the terminal apparatus 10.

The collation unit 13 collates the first biometric information received by the transmitting and receiving unit 11 with the second biometric information acquired by the input receiving unit 12. Then, the collation unit 13 outputs a collation result.

In a case in which the collation has succeeded, the registration unit 14 performs a FIDO registration process. The process of the registration unit 14 is performed according to a FIDO registration protocol. For example, the registration unit 14 acquires biometric information and stores it as the reference biometric information in the terminal apparatus 10. Further, the registration unit 14 generates a pair of a public key and a private key, stores the private key in the terminal apparatus 10, and transmits the public key to the authentication server 20 through the APP and WEB server 50. In a case in which the collation has failed, the registration unit 14 does not perform the FIDO registration process.

### "Configuration of APP and WEB Server 50"

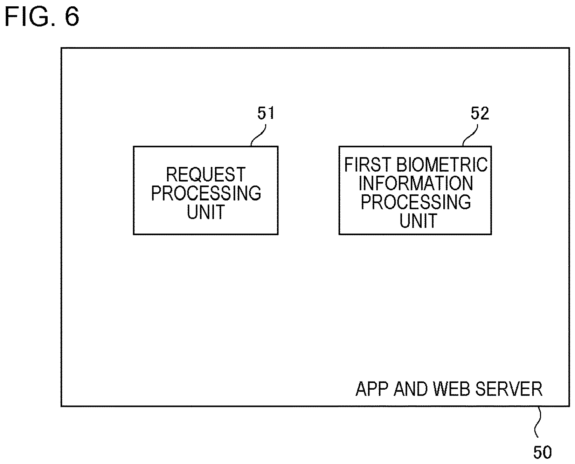

Fig. 6 illustrates an example of a functional block diagram of the APP and WEB server 50. As illustrated in Fig. 6, the APP and WEB server 50 includes a request processing unit 51 and a first biometric information processing unit 52.

The request processing unit 51 receives the user ID and the first biometric information request from the terminal apparatus 10. Then, the request processing unit 51 transmits the user ID and the first biometric information request to the authentication server 20.

The first biometric information processing unit 52 receives the first biometric information transmitted from the authentication server 20 in response to the first biometric information request. Then, the first biometric information processing unit 52 transmits the received first biometric information to the terminal apparatus 10.

### "Configuration of Authentication Server 20"

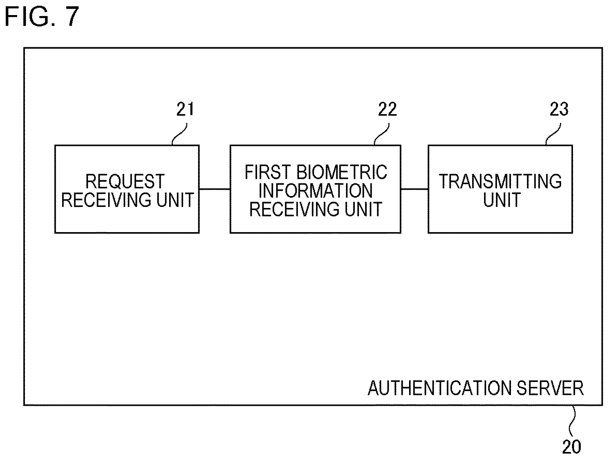

Fig. 7 illustrates an example of a functional block diagram of the authentication server 20. As illustrated in Fig. 7, the authentication server 20 includes a request receiving unit 21, a first biometric information receiving unit 22, and a transmitting unit 23.

The request receiving unit 21 receives the user ID and the first biometric information request from the APP and WEB server 50 (external apparatus).

The first biometric information receiving unit 22 transmits a request for the first biometric information stored so as to be associated with the user ID received by the request receiving unit 21 to the biometric information management server 60. Then, the first biometric information receiving unit 22 receives the first biometric information transmitted from the biometric information management server 60 in response to the request.

The transmitting unit 23 transmits the first biometric information received by the first biometric information receiving unit 22 to the APP and WEB server 50.

### "Flow of Process"

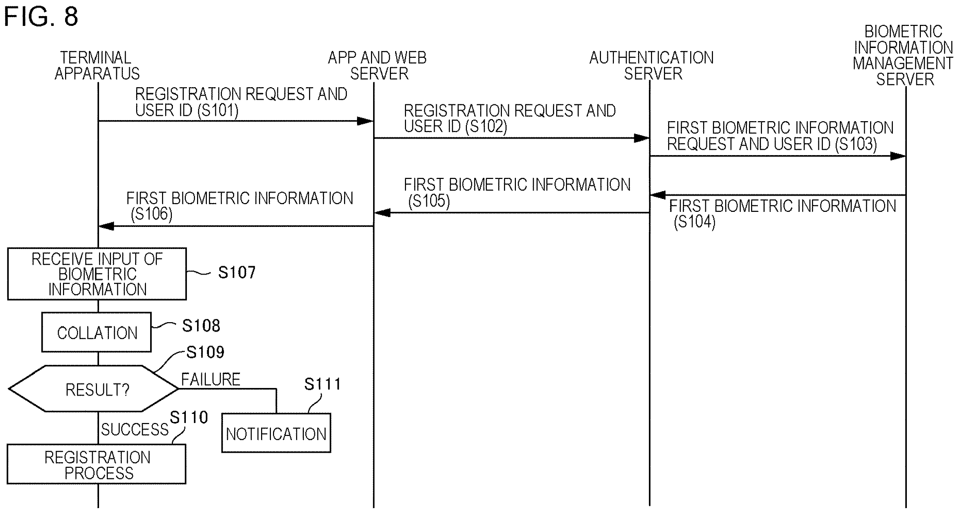

Next, an example of the flow of the FIDO registration process will be described with reference to a sequence diagram illustrated in Fig. 8.

First, the user operates the terminal apparatus 10 to start the dedicated application and logs in to the APP and WEB server 50. Then, the user performs an input operation to start the FIDO registration process on a screen of the dedicated application. At this time, the user inputs his or her own user ID (the user ID stored in the biometric information management server 60 so as to be associated with the first biometric information). Then, the terminal apparatus 10 transmits the user ID and the registration request to the APP and WEB server 50 (S101). The registration request is the above-mentioned "first biometric information request".

Then, the APP and WEB server 50 transmits the user ID and the registration request received in S101 to the authentication server 20 (S102).

The authentication server 20 transmits a request for the first biometric information stored so as to be associated with the user ID received in S102 to the biometric information management server 60 (S103). Then, the authentication server 20 receives the first biometric information transmitted from the biometric information management server 60 in response to the request (S104).

The authentication server 20 transmits the received first biometric information to the APP and WEB server 50 (S105). At this time, the authentication server 20 may transmit a policy or the like related to the FIDO authentication to the APP and WEB server 50. The policy includes information related to the capabilities or specifications that the terminal apparatus 10 needs to meet.

The APP and WEB server 50 transmits the received first biometric information to the terminal apparatus 10 (S106). At this time, the APP and WEB server 50 may transmit the policy or the like to the terminal apparatus 10.

Then, the terminal apparatus 10 displays a screen prompting the input of biometric information and receives the input of the second biometric information through the biometric information input apparatus (S107). Then, the terminal apparatus 10 collates the first biometric information received in S106 with the second biometric information received in S107 (S108).

In a case in which the collation has succeeded (success in S109), the terminal apparatus 10 performs the FIDO registration process (S113). For example, the terminal apparatus 10 acquires biometric information and stores it as the reference biometric information in the terminal apparatus 10. Further, the terminal apparatus 10 generates a pair of a public key and a private key, stores the private key in the terminal apparatus 10, and transmits the public key to the authentication server 20 through the APP and WEB server 50.

On the other hand, in a case in which the collation has failed (failure in S109), the terminal apparatus 10 notifies the user that it is difficult to perform the FIDO registration process since the collation has failed (S111). For example, information indicating that fact may be displayed on a display or may be output through a speaker.

### "Advantageous Effect"

According to the authentication system of this example embodiment described above, it is possible to perform biometric authentication using the biometric information registered in the biometric information management server 60 before the reference biometric information for FIDO authentication is registered. Then, it is possible to perform the FIDO registration process in a case in which the authentication has succeeded. It is possible to prevent the FIDO registration process from being performed in a case in which the authentication has failed.

According to the authentication system of this example embodiment, it is possible to prevent spoofing at the stage of registering the reference biometric information for FIDO authentication in the terminal apparatus 10.

### <Second Example Embodiment>

### "Outline of Authentication System"

An authentication system according to this example embodiment is different from that in the first example embodiment in that the registration process performed by the registration unit 14 of the terminal apparatus 10 (S110 in Fig. 8) is embodied. The other configurations are the same as those in the first example embodiment.

### "Configuration of Terminal Apparatus 10"

The registration unit 14 of the terminal apparatus 10 may register the first biometric information as the reference biometric information in the terminal apparatus 10. The first biometric information is the biometric information stored in the biometric information management server 60 and is the biometric information acquired by the transmitting and receiving unit 11 in S106 of Fig. 8.

In addition, the registration unit 14 of the terminal apparatus 10 may register the second biometric information as the reference biometric information in the terminal apparatus 10. The second biometric information is the biometric information received by the input receiving unit 12 in S107 of Fig. 8.

In addition, the registration unit 14 may receive the input of the biometric information through the biometric information input apparatus in S110 of Fig. 8 and may register the biometric information as the reference biometric information in the terminal apparatus 10. Hereinafter, the biometric information received by the registration unit 14 through the biometric information input apparatus is referred to as "third biometric information".

The third biometric information may be biometric information which is a type different from that of the first biometric information and the second biometric information. As an example of different types of biometric information, the first biometric information and the second biometric information are fingerprints and the third biometric information is a voiceprint or iris. However, different types of biometric information are not limited thereto.

The other configurations of the terminal apparatus 10 are the same as those in the first example embodiment.

### "Configuration of Authentication Server 20, APP and WEB Server 50, and Biometric Information Management Server 60"

The configurations of the authentication server 20, the APP and WEB server 50, and the biometric information management server 60 are the same as those in the first example embodiment.

### "Advantageous Effect"

According to the authentication system of this example embodiment described above, the same advantageous effect as that in the first example embodiment can be obtained.

Further, according to the authentication system of this example embodiment, the biometric information acquired for biometric authentication before the reference biometric information is registered can be registered as the reference biometric information for FIDO authentication. In this case, it is possible to avoid the inconvenience that the user needs to input biometric information many times.

In addition, according to the authentication system of this example embodiment, the input of the third biometric information can be received separately from the second biometric information acquired for biometric authentication before the reference biometric information is registered, and the third biometric information can be registered as the reference biometric information. Therefore, the biometric information which is a type different from that of the biometric information used for biometric authentication before the reference biometric information is registered can be registered as the reference biometric information. In this case, flexibility in the design related to the reference biometric information is increased, which is preferable.

### <Third Example Embodiment>

### "Outline of Authentication System"

A first biometric information request (FIDO registration request) is transmitted from a plurality of APP and WEB servers 50 to the authentication server 20 according to this example embodiment. For example, the APP and WEB server 50 of bank A which provides Internet banking services, the APP and WEB server 50 of bank B which provides Internet banking services, the APP and WEB server 50 of company C which provides game services, and the like transmit the first biometric information request to the authentication server 20 in response to a request from each user. Then, when receiving the first biometric information request, the authentication server 20 judges whether or not biometric authentication is required before the reference biometric information is registered on the basis of the application that has transmitted the request (on the basis of the ID of the application), and performs a process corresponding to the judgement result.

The authentication system according to this example embodiment is different from that in the first and second example embodiments in this point. The other configurations are the same as those in the first and second example embodiments.

### "Configuration of Authentication Server 20"

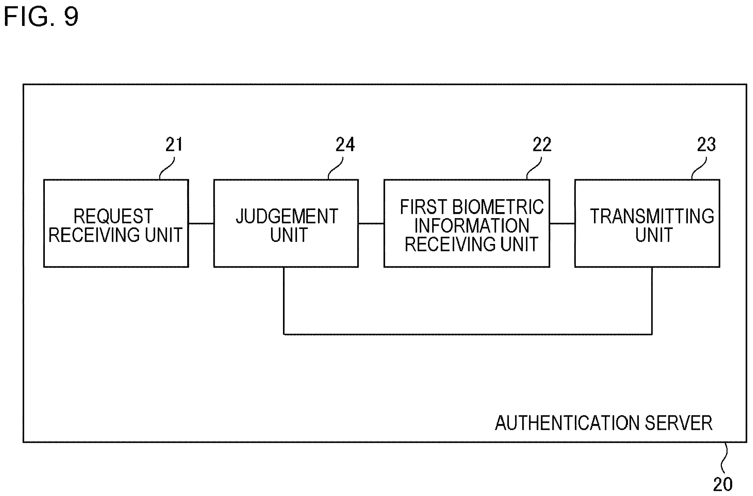

Fig. 9 illustrates an example of a functional block diagram of the authentication server 20. As illustrated in Fig. 9, the authentication server 20 includes a request receiving unit 21, a first biometric information receiving unit 22, a transmitting unit 23, and a judgement unit 24.

The request receiving unit 21 has the same configuration as that in the first and second example embodiments.

The judgement unit 24 determines the application that has transmitted the first biometric information request and judges whether or not to perform biometric authentication (hereinafter, a "spoofing prevention process") before the reference biometric information is registered on the basis of the determined application (on the basis of the ID of the determined application). For example, the ID of the application may be included in the first biometric information request transmitted from the APP and WEB server 50 to the authentication server 20.

The judgement unit 24 stores in advance information for determining an application that performs the spoofing prevention process and an application that does not perform the spoofing prevention process. For example, the information may be a list of applications that perform the spoofing prevention process, a list of applications that do not perform the spoofing prevention process, or others.

For example, an application that requires high security, such as Internet banking, is the application that performs the spoofing prevention process, and an application that does not require such high security is the application that does not perform the spoofing prevention process.

In a case in which the judgement result of the judgement unit 24 shows that "the spoofing prevention process is performed", the first biometric information receiving unit 22 transmits a request for the first biometric information to the biometric information management server 60 and receives the first biometric information. On the other hand, in a case in which the judgement result of the judgement unit 24 shows that "the spoofing prevention process is not performed", the first biometric information receiving unit 22 does not perform the transmission of the request and the reception of the first biometric information.

In a case in which the judgement result of the judgement unit 24 shows that "the spoofing prevention process is performed", the transmitting unit 23 transmits the first biometric information received by the first biometric information receiving unit 22 to the APP and WEB server 50. On the other hand, in a case in which the judgement result of the judgement unit 24 shows that "the spoofing prevention process is not performed", the transmitting unit 23 transmits information indicating that the spoofing prevention process is not performed to the APP and WEB server 50. In this case, the transmitting unit 23 does not perform the process of transmitting the first biometric information to the APP and WEB server 50.

The other configurations of the first biometric information receiving unit 22 and the transmitting unit 23 are the same as those in the first and second example embodiments.

### "Configuration of APP and WEB Server 50"

An example of a functional block diagram of the APP and WEB server 50 is illustrated in Fig. 6 as in the first and second example embodiments. As illustrated in Fig. 6, the APP and WEB server 50 includes a request processing unit 51 and a first biometric information processing unit 52. The request processing unit 51 has the same configuration as that in the first and second example embodiments.

The first biometric information processing unit 52 receives the first biometric information transmitted from the authentication server 20 in response to the first biometric information request or information indicating that the spoofing prevention process is not performed. In a case in which the authentication server 20 judges that "the spoofing prevention process is performed", the first biometric information processing unit 52 receives the first biometric information. On the other hand, in a case in which the authentication server 20 judges that "the spoofing prevention process is not performed", the first biometric information processing unit 52 receives the information indicating that the spoofing prevention process is not performed.

Then, the first biometric information processing unit 52 transmits the received first biometric information or information indicating that the spoofing prevention process is not performed to the terminal apparatus 10. The other configurations of the first biometric information processing unit 52 are the same as those in the first and second example embodiments.

### "Configuration of Terminal Apparatus 10"

An example of a functional block diagram of the terminal apparatus 10 is illustrated in Fig. 5, as in the first and second example embodiments. As illustrated in Fig. 5, the terminal apparatus 10 includes a transmitting and receiving unit 11, an input receiving unit 12, a collation unit 13, and a registration unit 14.

After transmitting the user ID and the first biometric information request to the APP and WEB server 50, the transmitting and receiving unit 11 receives the first biometric information or the information indicating that the spoofing prevention process is not performed. In a case in which the authentication server 20 judges that "the spoofing prevention process is performed", the transmitting and receiving unit 11 receives the first biometric information. On the other hand, in a case in which the authentication server 20 judges that "the spoofing prevention process is not performed", the transmitting and receiving unit 11 receives the information indicating that the spoofing prevention process is not performed.

In a case in which the transmitting and receiving unit 11 receives the first biometric information, the input receiving unit 12, the collation unit 13, and the registration unit 14 perform the same process as in the first and second example embodiments.

On the other hand, in a case in which the transmitting and receiving unit 11 receives the information indicating that the spoofing prevention process is not performed, the input receiving unit 12 does not receive the input of the second biometric information. Further, the collation unit 13 does not perform the collation between the first biometric information and the second biometric information. Then, the registration unit 14 performs the FIDO registration process.

In this case, the registration unit 14 receives the input of the third biometric information through the biometric information input apparatus and registers the third biometric information as the reference biometric information.

### "Configuration of Biometric Information Management Server 60"

The biometric information management server 60 has the same configuration as that in the first and second example embodiments.

### "Flow of Process"

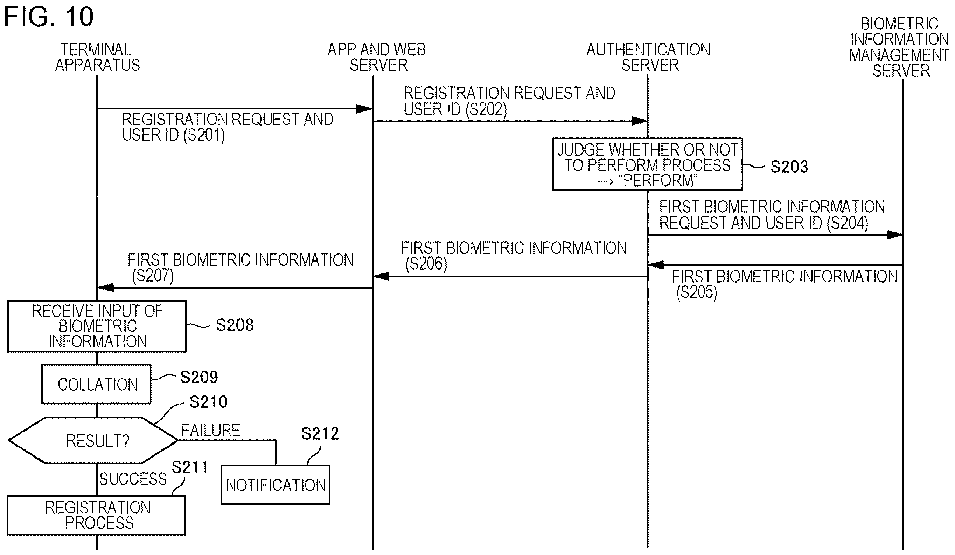

Next, an example of the flow of the FIDO registration process will be described with reference to a sequence diagram illustrated in Fig. 10.

A process in S201 and S202 is the same as the process in S101 and S102 of Fig. 8.

In S203, the authentication server 20 judges whether or not to perform the spoofing prevention process on the basis of the ID of the application that has transmitted the first biometric information request. Here, it is assumed that the authentication server 20 judges to perform the spoofing prevention process.

Then, the authentication server 20 transmits a request for the first biometric information registered so as to be associated with the user ID received in S202 to the biometric information management server 60 (S204). Then, the authentication server 20 receives the first biometric information returned from the biometric information management server 60 in response to the request (S205).

The authentication server 20 transmits the received first biometric information to the APP and WEB server 50 (S206). At this time, the authentication server 20 may transmit a policy or the like related to the FIDO authentication to the APP and WEB server 50. Then, the APP and WEB server 50 transmits the received first biometric information to the terminal apparatus 10 (S207). The APP and WEB server 50 may transmit the policy or the like to the terminal apparatus 10.

The terminal apparatus 10 displays a screen prompting the input of biometric information and receives the input of the second biometric information through the biometric information input apparatus (S208). Then, the terminal apparatus 10 collates the first biometric information received in S207 with the second biometric information received in S208 (S209).

In a case in which the collation has succeeded (success in S210), the terminal apparatus 10 performs the FIDO registration process (S214). For example, the terminal apparatus 10 acquires biometric information and stores it as the reference biometric information in the terminal apparatus 10. Further, the terminal apparatus 10 generates a pair of a public key and a private key, stores the private key in the terminal apparatus 10, and transmits the public key to the authentication server 20 through the APP and WEB server 50.

On the other hand, in a case in which the collation has failed (failure in S210), the terminal apparatus 10 notifies the user that it is difficult to perform the FIDO registration process since the collation has failed (S212). For example, information indicating that fact may be displayed on a display or may be output through a speaker.

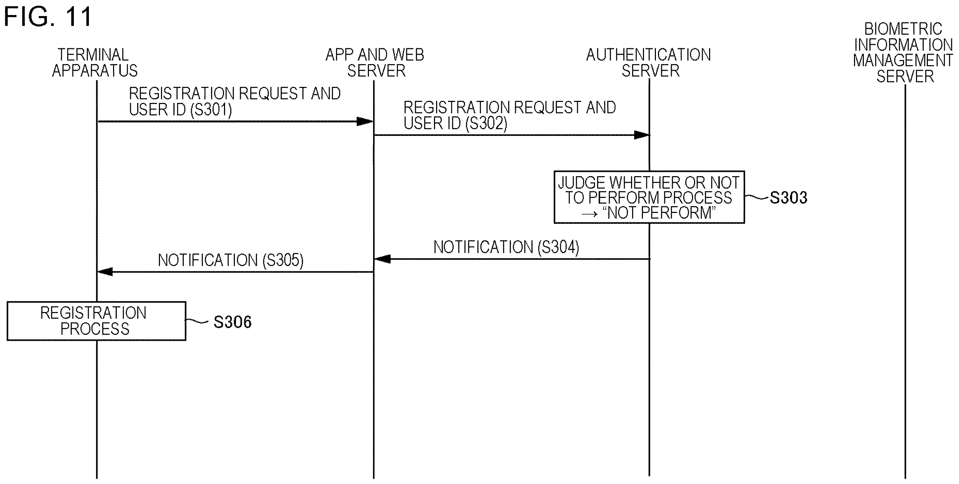

Next, another example of the FIDO registration process, specifically, an example of the flow of the process in a case in which it is judged in S203 of Fig. 10 that the spoofing prevention process is not performed will be described with reference to a sequence diagram illustrated in Fig. 11.

A process in S301 to S303 is the same as the process in S201 to S203 of Fig. 10.

In a case in which the authentication server 20 judges not to perform the spoofing prevention process in S303, the authentication server 20 notifies the APP and WEB server 50 that the spoofing prevention process is not performed (S304). At this time, the authentication server 20 may transmit a policy or the like related to the FIDO authentication to the APP and WEB server 50. Then, the APP and WEB server 50 notifies the terminal apparatus 10 that the spoofing prevention process is not performed (S305). At this time, the APP and WEB server 50 may transmit the policy or the like to the terminal apparatus 10.

The terminal apparatus 10 performs the FIDO registration process in response to the notification (S306). For example, the terminal apparatus 10 acquires biometric information and stores it as the reference biometric information in the terminal apparatus 10. Further, the terminal apparatus 10 generates a pair of a public key and a private key, stores the private key in the terminal apparatus 10, and transmits the public key to the authentication server 20 through the APP and WEB server 50.

### "Advantageous Effect"

According to the authentication system of this example embodiment described above, the same advantageous effect as that in the first and second example embodiment can be obtained. Further, according to the authentication system of this example embodiment, the authentication server 20 can receive the first biometric information request from a plurality of APP and WEB servers 50 and perform a predetermined process. Therefore, the versatility of the authentication server 20 is increased.

In addition, the authentication server 20 may not uniformly perform the same process on the first biometric information requests from the plurality of APP and WEB servers 50, but may judge whether or not to individually perform the spoofing prevention process and perform a process corresponding to the judgement result.

For example, the authentication server 20 may judge to perform the spoofing prevention process on an application that requires high security and does not require spoofing prevention, and may judge not to perform the spoofing prevention process on an application that does not require such high security. As a result, according to the authentication system of this example embodiment, the reference biometric information for FIDO authentication can be registered in the terminal apparatus 10 by a method suitable for each application, that is, a method without problems such as too low security or unnecessarily high security.

### <Fourth Example Embodiment>

### "Outline of Authentication System"

An authentication system according to this example embodiment is different from those in the first to third example embodiments in that the authentication server 20 collates the first biometric information with the second biometric information. This will be described below.

"Overview of Authentication System"

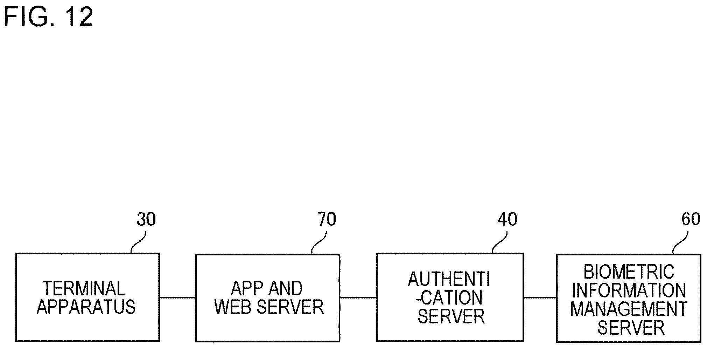

First, the overview of the authentication system according to this example embodiment will be described with reference to a functional block diagram illustrated in Fig. 12. The authentication system includes an authentication server 40 and an APP and WEB server 70. The authentication system may further include at least one of a terminal apparatus 30 and a biometric information management server 60. These apparatuses are configured so as to communicate with each other through a communication network such as the Internet.

Each of the authentication server 40, the APP and WEB server 70, and the biometric information management server 60 may be implemented by a plurality of servers which are physically and/or logically separated from each other, or may be physically and logically implemented by one server.

Further, the authentication server 40 and the APP and WEB server 70 may be configured to be physically and/or logically separated from each other. That is, a program that implements the authentication server 40 may be installed in one of two servers which are physically and/or logically separated from each other, and a program that implements the APP and WEB server 70 may be installed in the other server. In addition, the authentication server 40 and the APP and WEB server 70 may be physically and logically integrally configured. That is, both the program that implements the authentication server 40 and the program that implements the APP and WEB server 70 may be physically and logically installed in one server.

### "Configuration of Each Apparatus"

Hereinafter, the configuration of each apparatus will be described in detail.

### "Configuration of Biometric Information Management Server 60"

The biometric information management server 60 has the same configuration as those in the first to third example embodiments.

### "Configuration of Terminal Apparatus 10"

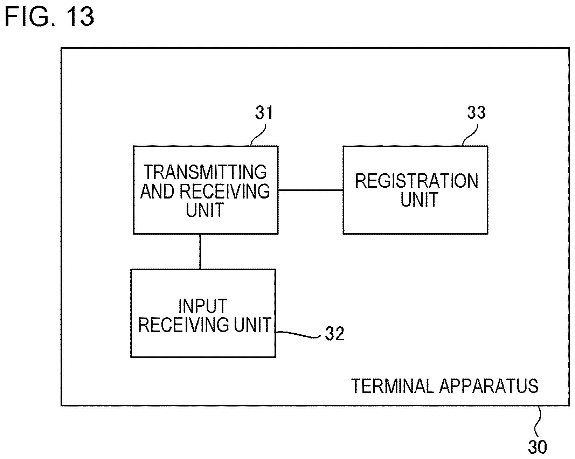

Fig. 13 illustrates an example of a functional block diagram of the terminal apparatus 30. As illustrated in Fig. 13, the terminal apparatus 30 includes a transmitting and receiving unit 31, an input receiving unit 32, and a registration unit 33. A predetermined application (dedicated application) is installed in the terminal apparatus 30 to give the functions of the transmitting and receiving unit 31, the input receiving unit 32, and the registration unit 33 to the terminal apparatus 30. That is, the dedicated application is a program that causes a computer of the terminal apparatus 30 to function as the transmitting and receiving unit 31, the input receiving unit 32, and the registration unit 33.

The input receiving unit 32 receives the input of biometric information through the biometric information input apparatus. Hereinafter, the biometric information acquired by the input receiving unit 32 is referred to as "second biometric information". Examples of the second biometric information include fingerprints, voiceprints, and irises. However, the second biometric information is not limited thereto. Further, examples of the biometric information input apparatus include a fingerprint sensor, a microphone, and a camera. However, the biometric information input apparatus is not limited thereto. The terminal apparatus 30 may include the biometric information input apparatus, or the biometric information input apparatus may be connected to the terminal apparatus 30.

The transmitting and receiving unit 31 transmits the user ID, the second biometric information, and a collation request to the APP and WEB server 70 (external apparatus). Then, the transmitting and receiving unit 31 receives the result of the collation between the first biometric information stored in the biometric information management server 60 so as to be associated with the user ID and the second biometric information from the APP and WEB server 70.

The registration unit 33 performs the FIDO registration process in a case in which the collation has succeeded, that is, in a case in which the collation result received by the transmitting and receiving unit 31 shows that "the collation has succeeded". For example, the registration unit 33 acquires biometric information and stores it as the reference biometric information in the terminal apparatus 30. Further, the registration unit 33 generates a pair of a public key and a private key, stores the private key in the terminal apparatus 30, and transmits the public key to the authentication server 40 through the APP and WEB server 70. Note that, in a case in which the collation has failed, the registration unit 33 does not perform the FIDO registration process.

The registration unit 33 may register the second biometric information as the reference biometric information in the terminal apparatus 30. The second biometric information is biometric information received by the input receiving unit 32 for biometric authentication before the reference biometric information is registered.

In addition, the registration unit 33 may register the first biometric information as the reference biometric information in the terminal apparatus 30. In this case, the transmitting and receiving unit 31 receives the first biometric information from the APP and WEB server 70 in addition to the collation result. The first biometric information is biometric information stored in the biometric information management server 60 and is biometric information used in biometric authentication before reference biometric information is registered.

In addition, the registration unit 33 may receive the input of biometric information through the biometric information input apparatus and register the biometric information as the reference biometric information in the terminal apparatus 30. Hereinafter, the biometric information received by the registration unit 33 through the biometric information input apparatus is referred to as "third biometric information".

The third biometric information may be biometric information which is a type different from that of the first biometric information and the second biometric information. As an example of different types of biometric information, the first biometric information and the second biometric information are fingerprints, and the third biometric information is a voiceprint or iris. However, different types of biometric information are not limited thereto.

Note that, in a case in which the collation has failed, that is, in a case in which the collation result received by the transmitting and receiving unit 31 shows that "the collation has failed", the registration unit 33 does not perform the FIDO registration process.

### "Configuration of APP and WEB Server 70"

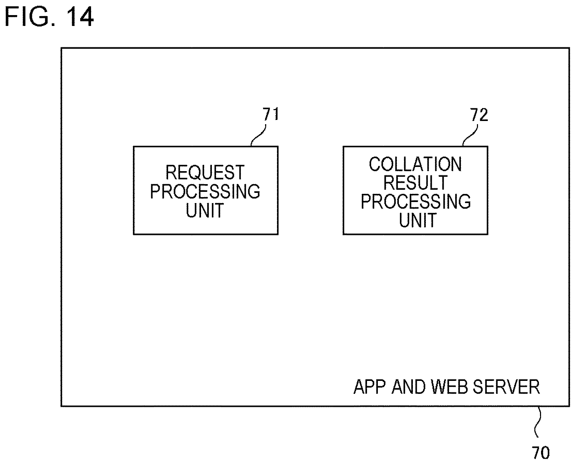

Fig. 14 illustrates an example of a functional block diagram of the APP and WEB server 70. As illustrated in Fig. 14, the APP and WEB server 70 includes a request processing unit 71 and a collation result processing unit 72.

The request processing unit 71 receives the user ID, the second biometric information, and the collation request from the terminal apparatus 30. Then, the request processing unit 71 transmits the user ID, the second biometric information, and the collation request to the authentication server 40.

The collation result processing unit 72 receives the result of the collation between the first biometric information and the second biometric information transmitted from the authentication server 40 in response to the collation request. Then, the collation result processing unit 72 transmits the received collation result to the terminal apparatus 30. Note that the collation result processing unit 72 may receive the first biometric information from the authentication server 40 in addition to the collation result. Then, the collation result processing unit 72 may transmit the received first biometric information to the terminal apparatus 30.

### "Configuration of Authentication Server 40"

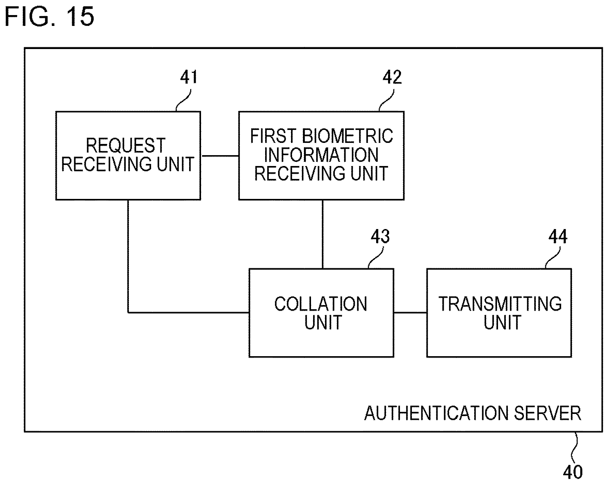

Fig. 15 illustrates an example of a functional block diagram of the authentication server 40. As illustrated in Fig. 15, the authentication server 40 includes a request receiving unit 41, a first biometric information receiving unit 42, a collation unit 43, and a transmitting unit 44.

The request receiving unit 41 receives the user ID, the second biometric information, and the collation request from the APP and WEB server 70 (external apparatus).

The first biometric information receiving unit 42 transmits a request for the first biometric information stored so as to be associated with the user ID received by the request receiving unit 41 to the biometric information management server 60. Then, the first biometric information receiving unit 42 receives the first biometric information transmitted from the biometric information management server 60 in response to the request.

The collation unit 43 collates the first biometric information received by the first biometric information receiving unit 42 with the second biometric information received by the request receiving unit 41.

The transmitting unit 44 transmits the collation result to the APP and WEB server 70. Note that the transmitting unit 44 may transmit the first biometric information to the APP and WEB server 70 in addition to the collation result. For example, the transmitting unit 44 may transmit the first biometric information to the APP and WEB server 70 in a case in which the collation result shows that the collation has succeeded, and may not transmit the first biometric information to the APP and WEB server 70 in a case in which the collation result shows that the collation has failed.

### "Flow of Process"

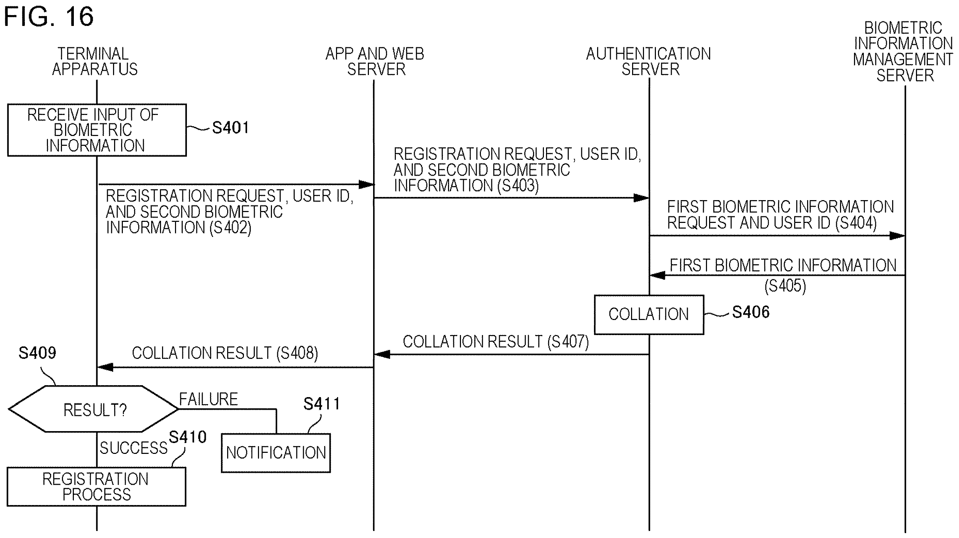

Next, an example of the flow of the FIDO registration process will be described with reference to a sequence diagram illustrated in Fig. 16.

First, the user operates the terminal apparatus 30 to start the dedicated application and logs in to the APP and WEB server 70. Then, the user performs an input operation to start the FIDO registration process on a screen of the dedicated application. At this time, the user inputs his or her own user ID (the user ID stored in the biometric information management server 60 so as to be associated with the first biometric information). In addition, the terminal apparatus 30 displays a screen prompting the input of biometric information and receives the input of the second biometric information through the biometric information input apparatus(S401). Then, the terminal apparatus 30 transmits the user ID, the second biometric information, and a registration request to the APP and WEB server 70 (S402). The registration request is the above-mentioned "collation request".

Then, the APP and WEB server 50 transmits the user ID, the second biometric information, and the registration request received in S402 to the authentication server 20 (S403).

The authentication server 40 transmits a request for the first biometric information stored so as to be associated with the user ID received in S403 to the biometric information management server 60 (S404). Then, the authentication server 40 receives the first biometric information transmitted from the biometric information management server 60 in response to the request (S405).

Then, the authentication server 40 collates the second biometric information received in S403 with the first biometric information received in S405 (S406). Then, the authentication server 40 transmits the collation result to the APP and WEB server 70 (S407). At this time, the authentication server 40 may transmit a policy or the like related to FIDO authentication to the APP and WEB server 70. The policy includes information related to the capabilities or specifications that the terminal apparatus 30 needs to meet. Then, the APP and WEB server 70 transmits the received collation result to the terminal apparatus 30 (S408). At this time, the APP and WEB server 70 may transmit the policy or the like to the terminal apparatus 30.

In a case in which the collation has succeeded (success in S409), the terminal apparatus 30 performs the FIDO registration process (S413). For example, the terminal apparatus 30 acquires biometric information and stores it as the reference biometric information in the terminal apparatus 30. Further, the terminal apparatus 30 generates a pair of a public key and a private key, stores the private key in the terminal apparatus 30, and transmits the public key to the authentication server 40 through the APP and WEB server 70.

On the other hand, in a case in which the collation has failed (failure in S409), the terminal apparatus 30 notifies the user that it is difficult to perform the FIDO registration process since the collation has failed (S411). For example, information indicating that fact may be displayed on a display or may be output through a speaker.

### "Advantageous Effect"

According to the authentication system of this example embodiment described above, the same advantageous effect as that in the first and second example embodiments can be obtained.

### <Fifth Example Embodiment>

### "Outline"

A collation request (FIDO registration request) is transmitted from a plurality of APP and WEB servers 70 to the authentication server 40 according to this example embodiment. Then, when receiving the collation request, the authentication server 40 judges whether or not biometric authentication is required before the reference biometric information is registered on the basis of the application that has transmitted the request (on the basis of the ID of the application), and performs a process corresponding to the judgement result.

The authentication system according to this example embodiment is different from that in the fourth example embodiment in this point. The other configurations are the same as those in the fourth example embodiment.

### "Configuration of Authentication Server 40"

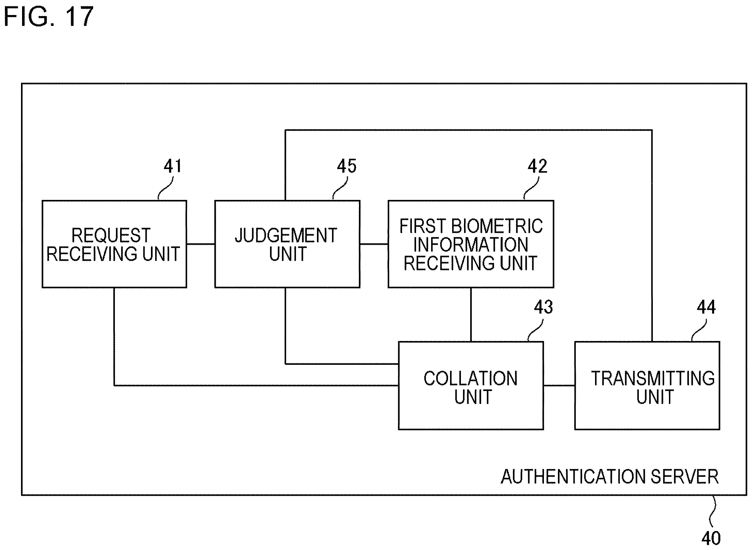

Fig. 17 illustrates an example of a functional block diagram of the authentication server 40. As illustrated in Fig. 17, the authentication server 40 includes a request receiving unit 41, a first biometric information receiving unit 42, a collation unit 43, and a transmitting unit 44.

The request receiving unit 41 has the same configuration as that in the fourth example embodiment.

The judgement unit 45 determines the application that has transmitted the collation request and judges whether or not to perform biometric authentication (spoofing prevention process) before the reference biometric information is registered on the basis of the determined application (on the basis of the ID of the determined application). For example, the ID of the application may be included in the collation request transmitted from the APP and WEB server 50 to the authentication server 20. The configuration of the judgement unit 45 is the same as the configuration of the judgement unit 24 described in the third example embodiment.

In a case in which the judgement result of the judgement unit 45 shows that "the spoofing prevention process is performed", the first biometric information receiving unit 42 transmits a request for the first biometric information to the biometric information management server 60 and receives the first biometric information. On the other hand, in a case in which the judgement result of the judgement unit 45 shows that "the spoofing prevention process is not performed", the first biometric information receiving unit 42 does not perform the transmission of the request and the reception of the first biometric information.

In a case in which the judgement result of the judgement unit 45 shows that "the spoofing prevention process is performed", the collation unit 43 performs the collation between the first biometric information and the second biometric information. On the other hand, in a case in which the judgement result of the judgement unit 45 shows that "the spoofing prevention process is not performed", the collation unit 43 does not perform the collation between the first biometric information and the second biometric information.

In a case in which the judgement result of the judgement unit 45 shows that "the spoofing prevention process is performed", the transmitting unit 44 transmits the collation result of the collation unit 43 to the APP and WEB server 70. In this case, the transmitting unit 44 may transmit the first biometric information to the APP and WEB server 70. On the other hand, in a case in which the judgement result of the judgement unit 45 shows that "the spoofing prevention process is not performed", the transmitting unit 44 transmits information indicating that the spoofing prevention process is not performed to the APP and WEB server 70. In this case, the transmitting unit 44 does not transmit the collation result or the first biometric information to the APP and WEB server 70.

The other configurations of the first biometric information receiving unit 42, the collation unit 43, and the transmitting unit 44 are the same as those in the fourth example embodiment.

### "Configuration of APP and WEB Server 70"

An example of the functional block diagram of the APP and WEB server 70 is illustrated in Fig. 14 as in the fourth example embodiment. As illustrated in Fig. 14, the APP and WEB server 70 includes a request processing unit 71 and a collation result processing unit 72. The request processing unit 71 has the same configuration as that in the fourth example embodiment.

The collation result processing unit 72 receives the collation result transmitted from the authentication server 40 in response to the collation request or information indicating that the spoofing prevention process is not performed. In a case in which the authentication server 40 judges that "the spoofing prevention process is performed", the collation result processing unit 72 receives the collation result. In this case, the collation result processing unit 72 may further receive the first biometric information. On the other hand, in a case in which the authentication server 40 judges that "the spoofing prevention process is not performed", the collation result processing unit 72 receives information indicating that the spoofing prevention process is not performed.

Then, the collation result processing unit 72 transmits the received collation result or the information indicating that the spoofing prevention process is not performed to the terminal apparatus 30. The collation result processing unit 72 may transmit the received first biometric information to the terminal apparatus 30. The other configurations of the collation result processing unit 72 are the same as those in the fourth example embodiment.

### "Configuration of Terminal Apparatus 30"

An example of the functional block diagram of the terminal apparatus 30 is illustrated in Fig. 13 as in the fourth example embodiment. As illustrated in Fig. 13, the terminal apparatus 30 includes a transmitting and receiving unit 31, an input receiving unit 32, and a registration unit 33. The input receiving unit 32 has the same configuration as that in the fourth example embodiment.

After transmitting the user ID, the second biometric information, and the collation request to the APP and WEB server 70, the transmitting and receiving unit 31 receives the collation result or the information indicating that the spoofing prevention process is not performed. In a case in which the authentication server 40 judges that "the spoofing prevention process is performed", the transmitting and receiving unit 31 receives the collation result. In this case, the transmitting and receiving unit 31 may further receive the first biometric information. On the other hand, in a case in which the authentication server 40 judges that "the spoofing prevention process is not performed", the transmitting and receiving unit 31 receives the information indicating that the spoofing prevention process is not performed.

In a case in which the transmitting and receiving unit 31 receives the collation result, the registration unit 33 performs the same process as that in the fourth example embodiment.

On the other hand, in a case in which the transmitting and receiving unit 31 receives the information indicating that the spoofing prevention process is not performed, the registration unit 33 performs the FIDO registration process. In this case, the registration unit 33 receives the input of the third biometric information through the biometric information input apparatus and registers the third biometric information as the reference biometric information.

### "Configuration of APP and WEB server 70 and Biometric Information Management Server 60"

The APP and WEB server 70 and the biometric information management server 60 have the same configurations as those in the fourth example embodiment.

### "Flow of Process"

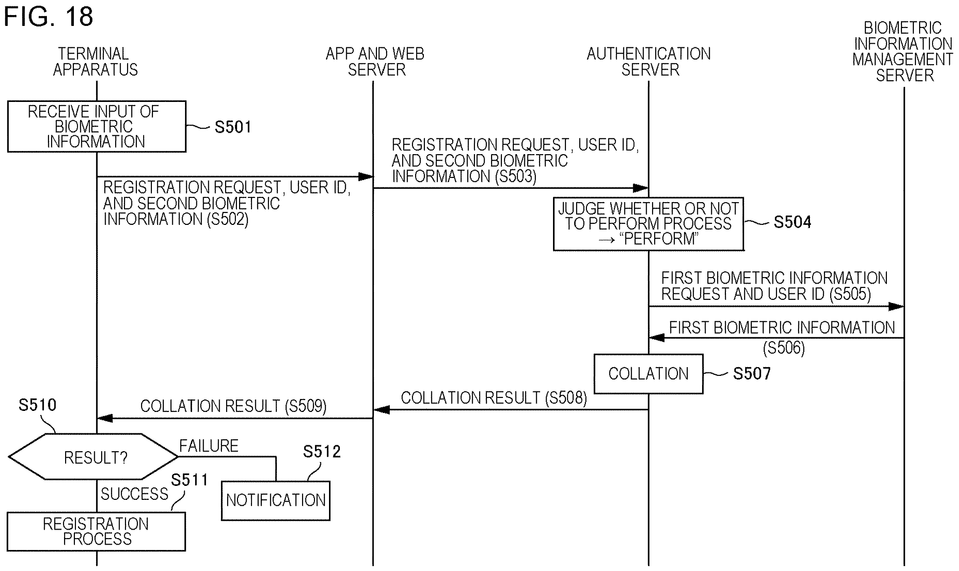

Next, an example of the flow of the FIDO registration process will be described with reference to a sequence diagram illustrated in Fig. 18.

A process in S501 to S503 is the same as the process in S401 to S403 of Fig. 16.

In S504, the authentication server 40 judges whether or not to perform the spoofing prevention process on the basis of the ID of the application that has transmitted the registration request (collation request). Here, it is assumed that the authentication server 40 judges to perform the spoofing prevention process.

Then, the authentication server 40 transmits a request for the first biometric information stored so as to be associated with the user ID received in S503 to the biometric information management server 60 (S505). Then, the authentication server 40 receives the first biometric information transmitted from the biometric information management server 60 in response to the request (S506).

Then, the authentication server 40 collates the second biometric information received in S503 with the first biometric information received in S506 (S507). Then, the authentication server 40 transmits the collation result to the APP and WEB server 70 (S508). At this time, the authentication server 40 may transmit a policy or the like related to FIDO authentication to the APP and WEB server 70. The APP and WEB server 70 transmits the received collation result to the terminal apparatus 30 (S509). At this time, the APP and WEB server 70 may transmit the policy or the like to the terminal apparatus 30.

In a case in which the collation has succeeded (success in S510), the terminal apparatus 30 performs the FIDO registration process (S511). For example, the terminal apparatus 30 acquires biometric information and stores it as the reference biometric information in the terminal apparatus 30. Further, the terminal apparatus 30 generates a pair of a public key and a private key, stores the private key in the terminal apparatus 30, and transmits the public key to the authentication server 40 through the APP and WEB server 70.

On the other hand, in a case in which the collation has failed (failure in S510), the terminal apparatus 30 notifies the user that it is difficult to perform the FIDO registration process since the collation has failed (S512). For example, information indicating that fact may be displayed on a display or may be output through a speaker.

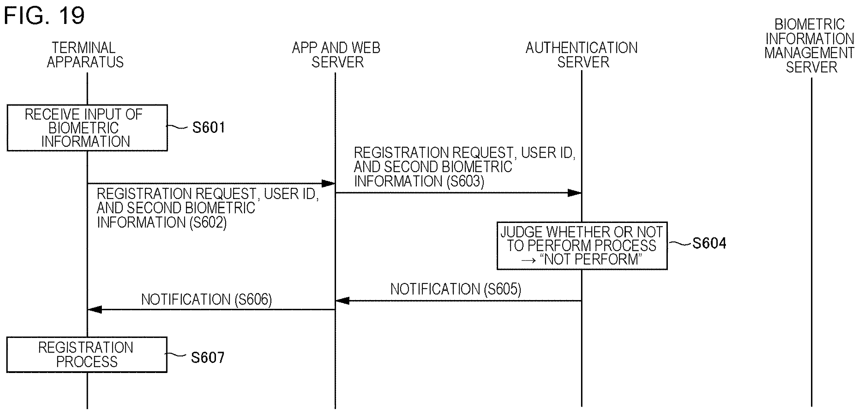

Next, an example of the FIDO registration process, specifically, an example of the flow of the process in a case in which it is judged in S504 of Fig. 18 that the spoofing prevention process is not performed will be described with reference to a sequence diagram illustrated in Fig. 19.

A process in S601 to S604 is the same as the process in S501 to S504 of Fig. 18.

In a case in which the authentication server 40 judges not to perform the spoofing prevention process in S604, the authentication server 40 notifies the APP and WEB server 70 that the spoofing prevention process is not performed (S605). At this time, the authentication server 40 may transmit a policy or the like related to FIDO authentication to the APP and WEB server 70. Then, the APP and WEB server 70 notifies the terminal apparatus 30 that the spoofing prevention process is not performed (S606). At this time, the APP and WEB server 70 may transmit the policy or the like to the terminal apparatus 10.

The terminal apparatus 30 performs the FIDO registration process in response to the notification (S607). For example, the terminal apparatus 30 acquires biometric information and stores it as the reference biometric information in the terminal apparatus 30. Further, the terminal apparatus 30 generates a pair of a public key and a private key, stores the private key in the terminal apparatus 30, and transmits the public key to the authentication server 40 through the APP and WEB server 70.

### "Advantageous Effect"

According to the authentication system of this example embodiment described above, the same advantageous effect as that in the third and fourth example embodiments can be obtained.

### <Hardware Configuration>

Next, an example of the hardware configuration of each apparatus (the terminal apparatuses 10 and 30, the authentication servers 20, and 40, the APP and WEB servers 50 and 70, and the biometric information management server 60) will be described. Each functional unit included in each apparatus according to this example embodiment is implemented by any combination of software and hardware centered on a central processing unit (CPU) of any computer, a memory, a program loaded to the memory, a storage unit, such as a hard disk for storing the program (which can store programs stored in advance in the stage of shipping the apparatus and programs downloaded from a storage medium, such as a compact disc (CD), and a server on the Internet), and a network connection interface. It is understood by those skilled in the art that a method and an apparatus for implementing the functional units can be modified in various ways.

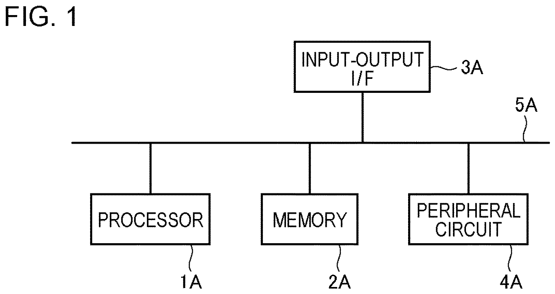

Fig. 1 is a block diagram illustrating the hardware configuration of each apparatus according to this example embodiment. As illustrated in Fig. 1, each apparatus includes a processor 1A, a memory 2A, an input-output interface 3A, a peripheral circuit 4A, and a bus 5A. The peripheral circuit 4A includes various modules. The processing apparatus may not include the peripheral circuit 4A. Note that each apparatus may be composed of a plurality of apparatuses which are physically separated from each other. In this case, each of the plurality of apparatuses for implementing each apparatus can have the above-mentioned hardware configuration.

The bus 5A is a data transmission line through which the processor 1A, the memory 2A, the peripheral circuit 4A, and the input-output interface 3A transmit and receive data. The processor 1A is an arithmetic processing apparatus such as a CPU or a graphics processing unit (GPU). The memory 2A is a memory such as a random access memory (RAM) or a read only memory (ROM). The input-output interface 3A includes, for example, an interface for acquiring information from an input apparatus, an external apparatus, an external server, an external sensor, and the like, or an interface for outputting information to an output apparatus, an external apparatus, an external server, and the like. Examples of the input apparatus include a keyboard, a mouse, and a microphone. Examples of the output apparatus include a display, a speaker, a printer, and a mailer. The processor 1A can issue commands to each module and perform calculation on the basis of the calculation results of each module.

Hereinafter, an example of reference embodiments will be additionally described.
1. There is provided a program that causes a computer of a terminal apparatus to function as: a transmitting and receiving unit that transmits a user ID and a first biometric information request to an external apparatus and receives first biometric information stored in advance in a biometric information management server so as to be associated with the user ID from the external apparatus; an input receiving unit that receives an input of second biometric information through a biometric information input apparatus; a collation unit that collates the first biometric information with the second biometric information; and a registration unit that performs a process of registering biometric information in the host terminal apparatus in a case in which the collation has succeeded.
2. In the program according to 1, the registration unit registers the first biometric information or the second biometric information in the host terminal apparatus.
3. In the program according to 1, the registration unit receives an input of third biometric information that is a type different from that of the first biometric information and the second biometric information and registers the third biometric information in the host terminal apparatus.
4. In the program according to any one of 1 to 3, the transmitting and receiving unit receives information indicating that a spoofing prevention process is not performed instead of the first biometric information, and the registration unit performs the process of registering biometric information in the host terminal apparatus in a case in which the transmitting and receiving unit receives the information indicating that the spoofing prevention process is not performed.
5. There is provided a terminal apparatus including: a transmitting and receiving unit that transmits a user ID and a first biometric information request to an external apparatus and receives first biometric information stored in advance in a biometric information management server so as to be associated with the user ID from the external apparatus; an input receiving unit that receives an input of second biometric information through a biometric information input apparatus; a collation unit that collates the first biometric information with the second biometric information; and a registration unit that performs a process of registering biometric information in the host terminal apparatus in a case in which the collation has succeeded.
6. There is provided a method for controlling a terminal apparatus in which a computer performs: a transmitting and receiving step of transmitting a user ID and a first biometric information request to an external apparatus and receiving first biometric information stored in advance in a biometric information management server so as to be associated with the user ID from the external apparatus; an input receiving step of receiving an input of second biometric information through a biometric information input apparatus; a collation step of collating the first biometric information with the second biometric information; and a registration step of performing a process of registering biometric information in the host terminal apparatus in a case in which the collation has succeeded.
7. There is provided an authentication server including: a request receiving unit that receives a user ID and a first biometric information request from an external apparatus; a first biometric information receiving unit that receives first biometric information stored in advance in a biometric information management server so as to be associated with the user ID from the biometric information management server; and a transmitting unit that transmits the first biometric information to the external apparatus.
8. The authentication server according to 7 further includes a judgement unit that determines an application which has transmitted the first biometric information request and judges whether or not to perform a spoofing prevention process on the basis of the determined application. In a case in which the judgement unit judges to perform the spoofing prevention process, the first biometric information receiving unit receives the first biometric information from the biometric information management server, and the transmitting unit transmits the first biometric information to the external apparatus.
9. In the authentication server according to 8, in a case in which the judgement unit judges not to perform the spoofing prevention process, the transmitting unit transmits information indicating that the spoofing prevention process is not performed to the external apparatus.
10. There is provided an authentication method in which a computer performs: a request receiving step of receiving a user ID and a first biometric information request from an external apparatus; a first biometric information receiving step of receiving first biometric information stored in advance in a biometric information management server so as to be associated with the user ID from the biometric information management server; and a transmitting step of transmitting the first biometric information to the external apparatus.
11. There is provided a program that causes a computer to function as: a request receiving unit that receives a user ID and a first biometric information request from an external apparatus; a first biometric information receiving unit that receives first biometric information stored in advance in a biometric information management server so as to be associated with the user ID from the biometric information management server; and a transmitting unit that transmits the first biometric information to the external apparatus.
12. There is provided a program that causes a computer of a terminal apparatus to function as: an input receiving unit that receives an input of second biometric information through a biometric information input apparatus; a transmitting and receiving unit that transmits a user ID, the second biometric information, and a collation request to an external apparatus and receives a result of collation between the second biometric information and first biometric information stored in advance in a biometric information management server so as to be associated with the user ID from the external apparatus; and a registration unit that performs a process of registering biometric information in the host terminal apparatus in a case in which the collation has succeeded.
13. In the program according to 12, the registration unit registers the second biometric information in the host terminal apparatus.
14. In the program according to 12, the registration unit receives the first biometric information from the external apparatus and registers the first biometric information in the host terminal apparatus.
15. In the program according to 12, the registration unit receives an input of third biometric information that is a type different from that of the first biometric information and the second biometric information and registers the third biometric information in the host terminal apparatus.
16. In the program according to any one of 12 to 15, the transmitting and receiving unit receives information indicating that a spoofing prevention process is not performed instead of the collation result, and the registration unit performs the process of registering biometric information in the host terminal apparatus in a case in which the transmitting and receiving unit receives the information indicating that the spoofing prevention process is not performed.
17. There is provided a terminal apparatus including: an input receiving unit that receives an input of second biometric information through a biometric information input apparatus; a transmitting and receiving unit that transmits a user ID, the second biometric information, and a collation request to an external apparatus and receives a result of collation between the second biometric information and first biometric information stored in advance in a biometric information management server so as to be associated with the user ID from the external apparatus; and a registration unit that performs a process of registering biometric information in the host terminal apparatus in a case in which the collation has succeeded.
18. There is provided a method for controlling a terminal apparatus in which a computer performs: an input receiving step of receiving an input of second biometric information through a biometric information input apparatus; a transmitting and receiving step of transmitting a user ID, the second biometric information, and a collation request to an external apparatus and receiving a result of collation between the second biometric information and first biometric information stored in advance in a biometric information management server so as to be associated with the user ID from the external apparatus; and a registration step of performing a process of registering biometric information in the host terminal apparatus in a case in which the collation has succeeded.
19. There is provided an authentication server including: a request receiving unit that receives a user ID, second biometric information, and a collation request from an external apparatus; a first biometric information receiving unit that receives first biometric information stored in advance in a biometric information management server so as to be associated with the user ID from the biometric information management server; a collation unit that collates the first biometric information with the second biometric information; and a transmitting unit that transmits a collation result to the external apparatus.
20. The authentication server according to 19 further includes a judgement unit that determines an application which has transmitted the collation request and judges whether or not to perform a spoofing prevention process on the basis of the determined application. In a case in which the judgement unit judges to perform the spoofing prevention process, the first biometric information receiving unit receives the first biometric information from the biometric information management server, the collation unit collates the first biometric information with the second biometric information, and the transmitting unit transmits the collation result to the external apparatus.
21. In the authentication server according to 20, in a case in which the judgement unit judges not to perform the spoofing prevention process, the transmitting unit transmits information indicating that the spoofing prevention process is not performed to the external apparatus.
22. There is provided an authentication method in which a computer performs: a request receiving step of receiving a user ID, second biometric information, and a collation request from an external apparatus; a first biometric information receiving step of receiving first biometric information stored in advance in a biometric information management server so as to be associated with the user ID from the biometric information management server; a collation step of collating the first biometric information with the second biometric information; and a transmitting step of transmitting a collation result to the external apparatus.
23. There is provided a program that causes a computer to function as: a request receiving unit that receives a user ID, second biometric information, and a collation request from an external apparatus; a first biometric information receiving unit that receives first biometric information stored in advance in a biometric information management server so as to be associated with the user ID from the biometric information management server; a collation unit that collates the first biometric information with the second biometric information; and a transmitting unit that transmits a collation result to the external apparatus.

Priority is claimed on Japanese Patent Application No. 2018-148747, filed on August 7, 2018, the content of which is incorporated herein by reference.

## Claims

1. A program that causes a computer of a terminal apparatus to function as:
a transmitting and receiving unit that transmits a user identifier (ID) and a first biometric information request to an external apparatus and receives first biometric information stored in advance in a biometric information management server so as to be associated with the user ID from the external apparatus;
an input receiving unit that receives an input of second biometric information through a biometric information input apparatus;
a collation unit that collates the first biometric information with the second biometric information; and
a registration unit that performs a process of registering biometric information in the host terminal apparatus in a case in which the collation has succeeded.

2. The program according to claim 1,
wherein the registration unit registers the first biometric information or the second biometric information in the host terminal apparatus.

3. The program according to claim 1,
wherein the registration unit receives an input of third biometric information that is a type different from that of the first biometric information and the second biometric information and registers the third biometric information in the host terminal apparatus.

4. The program according to any one of claims 1 to 3,
wherein the transmitting and receiving unit receives information indicating that a spoofing prevention process is not performed instead of the first biometric information, and
the registration unit performs the process of registering biometric information in the host terminal apparatus in a case in which the transmitting and receiving unit receives the information indicating that the spoofing prevention process is not performed.

5. A terminal apparatus comprising:
a transmitting and receiving unit that transmits a user ID and a first biometric information request to an external apparatus and receives first biometric information stored in advance in a biometric information management server so as to be associated with the user ID from the external apparatus;
an input receiving unit that receives an input of second biometric information through a biometric information input apparatus;
a collation unit that collates the first biometric information with the second biometric information; and
a registration unit that performs a process of registering biometric information in the host terminal apparatus in a case in which the collation has succeeded.

6. A method for controlling a terminal apparatus in which a computer performs:
a transmitting and receiving step of transmitting a user ID and a first biometric information request to an external apparatus and receiving first biometric information stored in advance in a biometric information management server so as to be associated with the user ID from the external apparatus;
an input receiving step of receiving an input of second biometric information through a biometric information input apparatus;
a collation step of collating the first biometric information with the second biometric information; and
a registration step of performing a process of registering biometric information in the host terminal apparatus in a case in which the collation has succeeded.

7. An authentication server comprising:
a request receiving unit that receives a user ID and a first biometric information request from an external apparatus;
a first biometric information receiving unit that receives first biometric information stored in advance in a biometric information management server so as to be associated with the user ID from the biometric information management server; and
a transmitting unit that transmits the first biometric information to the external apparatus.

8. The authentication server according to claim 7, further comprising:
a judgement unit that determines an application which has transmitted the first biometric information request and judges whether or not to perform a spoofing prevention process on the basis of the determined application,
wherein, in a case in which the judgement unit judges to perform the spoofing prevention process, the first biometric information receiving unit receives the first biometric information from the biometric information management server, and the transmitting unit transmits the first biometric information to the external apparatus.

9. The authentication server according to claim 8,
wherein, in a case in which the judgement unit judges not to perform the spoofing prevention process, the transmitting unit transmits information indicating that the spoofing prevention process is not performed to the external apparatus.

10. An authentication method in which a computer performs:
a request receiving step of receiving a user ID and a first biometric information request from an external apparatus;
a first biometric information receiving step of receiving first biometric information stored in advance in a biometric information management server so as to be associated with the user ID from the biometric information management server; and
a transmitting step of transmitting the first biometric information to the external apparatus.

11. A program that causes a computer to function as:
a request receiving unit that receives a user ID and a first biometric information request from an external apparatus;
a first biometric information receiving unit that receives first biometric information stored in advance in a biometric information management server so as to be associated with the user ID from the biometric information management server; and
a transmitting unit that transmits the first biometric information to the external apparatus.

12. A program that causes a computer of a terminal apparatus to function as:
an input receiving unit that receives an input of second biometric information through a biometric information input apparatus;
a transmitting and receiving unit that transmits a user ID, the second biometric information, and a collation request to an external apparatus and receives a result of collation between the second biometric information and first biometric information stored in advance in a biometric information management server so as to be associated with the user ID from the external apparatus; and
a registration unit that performs a process of registering biometric information in the host terminal apparatus in a case in which the collation has succeeded.

13. The program according to claim 12,
wherein the registration unit registers the second biometric information in the host terminal apparatus.

14. The program according to claim 12,
wherein the registration unit receives the first biometric information from the external apparatus and registers the first biometric information in the host terminal apparatus.

15. The program according to claim 12,
wherein the registration unit receives an input of third biometric information that is a type different from that of the first biometric information and the second biometric information and registers the third biometric information in the host terminal apparatus.

16. The program according to any one of claims 12 to 15,
wherein the transmitting and receiving unit receives information indicating that a spoofing prevention process is not performed instead of the collation result, and
the registration unit performs the process of registering biometric information in the host terminal apparatus in a case in which the transmitting and receiving unit receives the information indicating that the spoofing prevention process is not performed.

17. A terminal apparatus comprising:
an input receiving unit that receives an input of second biometric information through a biometric information input apparatus;
a transmitting and receiving unit that transmits a user ID, the second biometric information, and a collation request to an external apparatus and receives a result of collation between the second biometric information and first biometric information stored in advance in a biometric information management server so as to be associated with the user ID from the external apparatus; and
a registration unit that performs a process of registering biometric information in the host terminal apparatus in a case in which the collation has succeeded.

18. A method for controlling a terminal apparatus in which a computer performs:
an input receiving step of receiving an input of second biometric information through a biometric information input apparatus;
a transmitting and receiving step of transmitting a user ID, the second biometric information, and a collation request to an external apparatus and receiving a result of collation between the second biometric information and first biometric information stored in advance in a biometric information management server so as to be associated with the user ID from the external apparatus; and
a registration step of performing a process of registering biometric information in the host terminal apparatus in a case in which the collation has succeeded.

19. An authentication server comprising:
a request receiving unit that receives a user ID, second biometric information, and a collation request from an external apparatus;
a first biometric information receiving unit that receives first biometric information stored in advance in a biometric information management server so as to be associated with the user ID from the biometric information management server;
a collation unit that collates the first biometric information with the second biometric information; and
a transmitting unit that transmits a collation result to the external apparatus.

20. The authentication server according to claim 19, further comprising:
a judgement unit that determines an application that has transmitted the collation request and judges whether or not to perform a spoofing prevention process on the basis of the determined application,
wherein, in a case in which the judgement unit judges to perform the spoofing prevention process, the first biometric information receiving unit receives the first biometric information from the biometric information management server, the collation unit collates the first biometric information with the second biometric information, and the transmitting unit transmits the collation result to the external apparatus.

21. The authentication server according to claim 20,
wherein, in a case in which the judgement unit judges not to perform the spoofing prevention process, the transmitting unit transmits information indicating that the spoofing prevention process is not performed to the external apparatus.

22. An authentication method in which a computer performs:
a request receiving step of receiving a user ID, second biometric information, and a collation request from an external apparatus;
a first biometric information receiving step of receiving first biometric information stored in advance in a biometric information management server so as to be associated with the user ID from the biometric information management server;
a collation step of collating the first biometric information with the second biometric information; and
a transmitting step of transmitting a collation result to the external apparatus.

23. A program that causes a computer to function as:
a request receiving unit that receives a user ID, second biometric information, and a collation request from an external apparatus;
a first biometric information receiving unit that receives first biometric information stored in advance in a biometric information management server so as to be associated with the user ID from the biometric information management server;
a collation unit that collates the first biometric information with the second biometric information; and
a transmitting unit that transmits a collation result to the external apparatus.
